# FASCICULE DE BREVET EUROPEEN

(11) **EP 2 091 028 B1**
(45) Date de publication et mention de la délivrance du brevet: **04.04.2018**
(21) Numéro de dépôt: 09152319.1
(22) Date de dépôt: 06.02.2009
(51) Int. Cl.: G07F 7/10, G07F 7/08, G06Q 20/34, G06F 21/34

(54) **Procédé de détection de cartes à microprocesseur non authentiques, carte à microprocesseur, terminal lecteur de carte et programmes correspondants**
Verfahren zur Erkennung von nicht authentischen Mikroprozessorkarten, entsprechende Mikroprozessorkarte, entsprechendes Kartenleseendgerät und entsprechende Programme
Method of detecting non-authentic microprocessor cards, corresponding microprocessor card, card-reading terminal and programs

(30) Priorité: 12.02.2008 FR 0850888
(43) Date de publication de la demande: 19.08.2009
(73) Titulaire: Ingenico Group, 75015 Paris (FR)
(72) Inventeur: Naccache, David, 75018 PARIS (FR)
(74) Mandataire: Vidon Brevets & Stratégie

(56) Documents cités:
- EP-A- 0 427 601
- EP-A- 2 065 857
- WO-A-01/86601
- WO-A-2005/048603
- US-A- 5 436 971
- US-A1- 2002 199 027

## Description

### 1. Domaine de l'invention

Le domaine de l'invention est celui de la lutte contre la contrefaçon d'objets à microprocesseur sécurisé, appelé par la suite puce électronique.

L'invention concerne plus particulièrement la détection de fraudes, de tentatives de fraude ou de toutes autres actions illégales à l'aide d'objets à puce copiés, contrefaits, imités, ou clonés, par des personnes mal intentionnées.

L'invention s'applique notamment aux cartes à puce.

### 2. Art antérieur

Par la suite, on décrit à titre d'exemple, l'utilisation de ces cartes à puce comme cartes de paiement qui sont, de manière connue, utilisées par exemple pour régler des achats chez un commerçant ou pour effectuer un retrait de billets à un distributeur automatique de billets (DAB).

D'autres applications, telles que l'accès à un site ou à un service, sont bien sûr également connues et traitées de la même façon. De même, on comprend que la notion de « carte à puce » peut être généralisée à d'autres types d'objets portatifs équipés d'un microprocesseur sécurisé.

Les spécifications des cartes à puce fonctionnant avec un contact électrique sont définies par la norme internationale ISO 7816 de l'Organisation Internationale de Normalisation («International Organization for Standardization » en anglais). Ces spécifications sont publiques et accessibles à tous, et donc notamment aux personnes malintentionnées.

En particulier, la norme ISO 7816-4 spécifie le contenu des messages (commandes, réponses) entre une carte à puce et un lecteur de cartes ainsi que les structures des données contenues dans ces messages (sécurisation des communications). Les commandes de base pour la lecture, l'écriture et la mise à jour des données d'une carte à puce par un lecteur de cartes, et qui seront appelées par la suite « commandes standards et publiques », sont par exemple :
- une commande de sécurité (vérifier un numéro d'identification personnel, appelé NIP, par exemple) ;
- une commande de personnalisation (écrire dans la mémoire) ;
- une commande de paiement (débiter, créditer) ;
- une commande de cryptographie (signer un bloc de données, vérifier la signature, générer une clé) ;
- une commande de gestion des fichiers (sélectionner, lire , écrire, créer).

Le standard international de sécurité EMV (abréviation en anglais d'Europay, Mastercard et Visa (marques déposées)), qui est spécifique au domaine bancaire, établit les règles nécessaires à l'interopérabilité internationale entre les cartes de paiement et les terminaux lecteurs de cartes, permettant d'effectuer des transactions de manière sécurisée, quel que soit l'émetteur de la carte de paiement et quel que soit le terminal lecteur de cartes.

Un contrefacteur (fraudeur) ayant extrait d'une carte légitime ou authentique (c'est-à-dire mise sur le marché par les fabricants habilités de cartes à puce) les informations lui permettant de reproduire son comportement logique, peut, à partir des spécifications publiques précédemment mentionnées, programmer un circuit électronique acheté dans le commerce pour produire une carte clonée ou non authentique (appelée « clone » par la suite).

On a précédemment tenté d'empêcher le clonage des cartes de paiement authentiques par l'utilisation de clés cryptographiques, en associant à une carte de paiement un numéro d'identification personnel (NIP), que l'on appelle aussi PIN (en anglais « Personal Identification Number »), code confidentiel ou code secret, et qui n'est supposé n'être connu que par le titulaire (utilisateur autorisé) de la carte de paiement.

Le document WO 01/86601 A décrit une méthode qui permet à un dispositif (de type terminal) d'authentifier un objet portatif, tel qu'une carte à puce par exemple. Pour cela, il est prévu l'envoi par le terminal d'un ordre de calcul de signature à l'objet portatif. Au lieu d'envoyer à la carte un aléa classique constitué par un nombre défini par le serveur, le terminal envoie un ordre de calcul sous la forme d'un message.

Le document EP 0 427 601 A décrit une méthode permettant d'authentifier une carte à microprocesseur utilisée, par exemple, dans un terminal de télévision à péage, une telle carte permettant de désembrouiller des programmes reçus par le terminal. L'authentification est commandée par des messages d'authentification produits par un centre de gestion et peut comprendre par exemple au moins deux opérations combinatoires différentes effectuées dans la carte à partir d'un nombre secret ("signature") mémorisé dans la carte.

### 3. Inconvénients de l'art antérieur

Une telle technique n'offre cependant pas toutes les garanties contre le clonage des cartes de paiement, puisqu'un code confidentiel associé à une carte de paiement peut être divulgué soit chez l'encarteur (le fabricant de la carte) lors de la personnalisation de la carte, soit chez l'émetteur de la carte (le fournisseur de services tel qu'un opérateur téléphonique ou un organisme bancaire par exemple) par malveillance ou suite à une attaque d'un fraudeur.

Une carte de paiement clonée, si elle a été efficacement programmée, est difficilement différenciable d'une carte de paiement authentique, leurs comportements logiques étant identiques même si elles ne comportent pas le même circuit électronique, et il n'existe pas à ce jour de méthode de détection efficace capable de détecter des cartes de paiement clonées.

### 4. Objectifs de l'invention

L'invention a notamment pour objectif de pallier ces inconvénients de l'art antérieur.

Plus précisément, un objectif de l'invention est de fournir une technique efficace de lutte contre la contrefaçon de cartes à puce, ou d'un objet portatif similaire.

Un autre objectif de l'invention est de détecter les cartes non authentiques, appelées clones, et d'empêcher leur utilisation.

L'invention a également pour objectif de fournir une telle technique qui soit relativement peu coûteuse, fiable et simple à mettre en oeuvre.

### 5. Exposé de l'invention

L'invention propose une solution nouvelle qui ne présente pas l'ensemble de ces inconvénients de l'art antérieur, sous la forme d'un procédé selon la revendication indépendante 1. Ainsi, le procédé selon l'invention permet une vérification de l'authenticité d'une carte à puce sur la base de la reconnaissance et/ou du traitement par la carte à puce d'une commande secrète (donc distincte de celles normalisées ou publiques) transmise par un terminal lecteur de cartes. La commande secrète étant préalablement insérée dans chaque carte à puce authentique, seule une carte à puce authentique peut reconnaître et/ou traiter de manière correcte une telle commande secrète lorsqu'elle est transmise par un terminal lecteur de cartes. La présence d'un clone est donc détectée lorsqu'une carte à puce ne peut reconnaître et/ou traiter de manière correcte une telle commande secrète (même si ce clone réagit correctement aux commandes publiques).

Un tel procédé est relativement peu coûteux, fiable et simple à mettre en oeuvre. Il suffit, à un moment donné où cela est nécessaire (par exemple une recrudescence de clones), d'adapter les logiciels des terminaux pour qu'ils émettent une ou plusieurs commandes secrètes. Selon un autre aspect, l'invention concerne une carte à microprocesseur selon la revendication indépendante 5. L'invention concerne, selon un autre aspect, un terminal lecteur de carte à microprocesseur, selon la revendication indépendante 7. Encore un autre aspect de l'invention concerne un produit programme d'ordinateur selon la revendication indépendante 8.

### 6. Liste des figures

D'autres caractéristiques et avantages de l'invention apparaîtront plus clairement à la lecture de la description suivante de deux modes de réalisation particuliers, donnés à titre de simples exemples illustratifs et non limitatifs, et des dessins annexés, parmi lesquels :
- la figure 1 illustre schématiquement un exemple de système mettant en oeuvre l'invention selon un mode de réalisation particulier de l'invention ;
- la figure 2 présente les étapes principales du procédé de détection de cartes à microprocesseur non authentiques selon un premier mode de réalisation ;
- la figure 3 présente les étapes principales du procédé de détection de cartes à microprocesseur non authentiques selon un second mode de réalisation.

### 7. Description d'un mode de réalisation de l'invention

### 6.1 Principe général

Le principe général de l'invention repose sur la mémorisation, en plus d'un jeu de commandes standard et public, d'un jeu d'au moins une commande secrète, qui ne peut pas être connu d'un contrefacteur, dans une mémoire d'une carte à microprocesseur. Plus précisément, le procédé de l'invention permet la détection de l'authenticité d'une carte sur la base de la reconnaissance et/ou du traitement par cette carte d'une commande secrète appelée (émise) par un terminal lecteur de cartes.

### 6.2 Exemple de système mettant en oeuvre l'invention

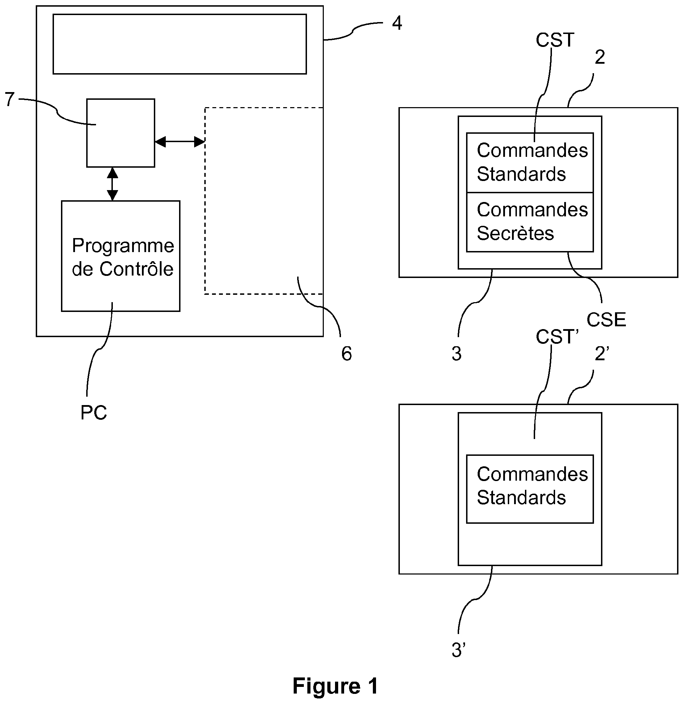

On se place dans la suite dans le cadre d'un mode de réalisation particulier de l'invention, en relation avec la figure 1, selon lequel une carte à puce 2 (carte à microprocesseur) est une carte de paiement émise par un organisme bancaire. La carte à puce 2 est authentique, c'est-à-dire non clonée, et est capable de communiquer avec un terminal de paiement 4 (terminal lecteur de cartes à puce) lorsqu'elle est insérée dans un lecteur de cartes 6 du terminal de paiement 4.

On suppose ici que le porteur de la carte à puce 2 souhaite accéder à un service bancaire nécessitant qu'il s'authentifie au préalable par l'intermédiaire du terminal de paiement 4.

La carte à puce 2 comprend classiquement un microprocesseur et différentes mémoires RAM, ROM et/ou EEPROM (non représentés).

Le terminal de paiement 4 comprend généralement un écran d'affichage, un clavier numérique ou alphanumérique, une imprimante (non représentés), un lecteur de cartes 6 et une unité centrale de traitement (microprocesseur) 7.

Le terminal de paiement 4 comprend également un programme de contrôle PC qui peut être mis en oeuvre par le microprocesseur 7.

L'invention propose donc d'insérer dans une carte authentique (telle que la carte à puce 2), en plus d'un premier jeu de commandes standard et public CST, un second jeu d'au moins une commande secrète CSE, le premier jeu de commandes CST étant distinct du second jeu de commandes CSE. Les premier et second jeux de commandes CST et CSE peuvent être mémorisés dans une mémoire 3 de stockage de commandes de la carte à puce 2 pendant sa fabrication, par exemple chez l'encarteur. Le second jeu de commandes CSE, au moins, peut être stocké dans une partie sécurisée de la mémoire 3.

On a représenté sur la figure 1 une carte à puce clonée 2' comprenant un jeu de commandes standard et public CST' (obtenu par exemple sur Internet) mais qui ne comprend bien sûr pas de commandes secrètes à la différence de la carte à puce 2 authentique.

Dans le cas où il s'avèrerait que des cartes clonées (du même type que la carte à puce 2') sont en circulation, l'invention propose donc de détecter ces clones en modifiant le programme de contrôle PC des terminaux de paiement (ou au moins certains d'entre eux), tel que le terminal de paiement 4, pour qu'ils utilisent les commandes secrètes.

Selon l'invention, le terminal de paiement 4 comprend ainsi des moyens de réception d'un programme de contrôle modifié et des moyens d'exécution du programme de contrôle modifié. Ce programme de contrôle modifié peut comprendre un appel (ou une mise en oeuvre) d'au moins une commande secrète du jeu d'au moins une commande secrète CSE qui a été préalablement inséré dans chaque carte authentique, comme souligné précédemment.

L'appel aux commandes secrètes effectue au moins une des opérations appartenant au groupe comprenant :
- lecture et/ou écriture dans une mémoire ;
- opérations mathématiques et logiques.

Par exemple, l'appel à une commande secrète peut consister en un ou plusieurs accès, en lecture ou en écriture, à une mémoire de la carte. Ainsi, un appel à une commande peut dans un premier temps requérir l'écriture en mémoire d'une donnée prédéterminée, puis, dans un deuxième temps, la lecture de cette donnée précédemment écrite.

De manière plus complexe, un appel à une commande secrète peut consister en une succession d'opérations mathématiques ou logiques. Par exemple, une telle commande secrète peut récupérer deux données dans deux emplacements mémoire différents, en effectuer la somme ou le produit, et comparer le résultat avec un résultat attendu.

Ces commandes secrètes ne modifient a priori pas le fonctionnement « utile » du terminal (par exemple les opérations classiques de distribution de billets), mais permettent d'ajouter des traitements de contrôle, qui vont permettre de distinguer les cartes authentiques et les clones.

Le terminal de paiement 4 comprend ainsi des moyens de détection de l'authenticité d'une carte à puce insérée dans le lecteur de cartes 6 si la commande secrète est reconnue et/ou traitée de façon correcte par la carte à puce, ou de la présence d'un clone, si la commande secrète n'est pas reconnue et/ou traitée de façon erronée par la carte.

### 6.3 Premier exemple de mise en oeuvre

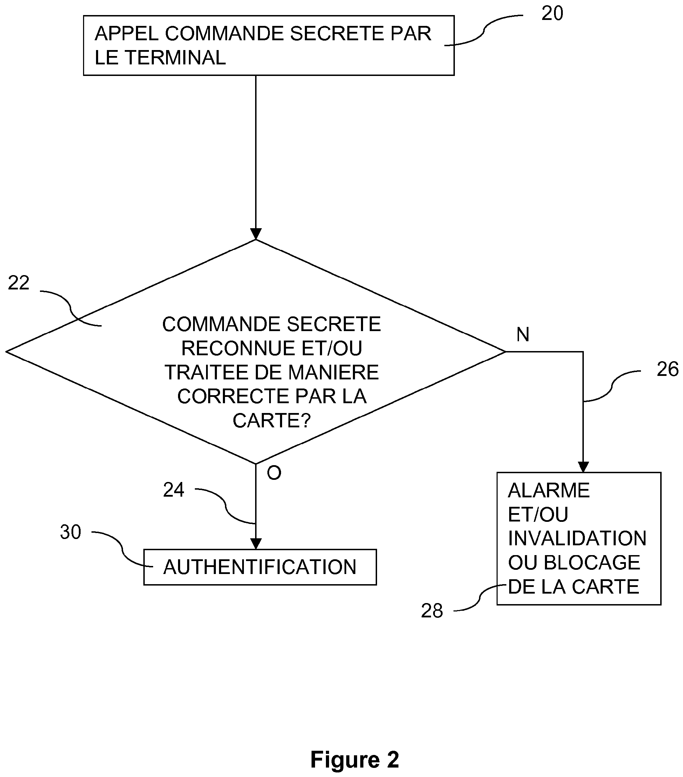

On présente ci-dessous, en relation avec la figure 2, les étapes principales d'un procédé de détection de cartes à microprocesseur non authentiques selon un premier mode de réalisation particulier de l'invention.

On se place dans la suite dans une configuration où une carte à puce (qu'elle soit authentique 2 ou clonée 2') est insérée dans le lecteur de cartes 6 du terminal de paiement 4 et où le programme de contrôle PC du terminal de paiement 4 a été modifié en réponse par exemple à une information selon laquelle des cartes clonées sont en circulation.

Comme illustré en figure 2, le procédé de détection selon l'invention débute par une étape 20 d'appel d'au moins une commande dite secrète dans le programme de contrôle PC modifié du terminal de paiement 4.

Il est ensuite déterminé à l'étape 22 si la commande secrète est reconnue et/ou traitée de manière correcte par la carte à puce.

La sortie « oui » 24 permet par exemple un passage à une étape 30 d'authentification classique qui consiste à comparer une signature saisie au clavier du terminal de paiement 4 aux données présentes dans la carte à puce 2. Ce traitement, connu en soi et appliqué dans toutes les cartes à puce, n'est pas décrit plus en détail ici.

La sortie « non » 26 indique la détection de la présence d'un clone qui peut entraîner à l'étape 28 la génération d'une alarme et/ou l'invalidation ou le blocage du clone par le terminal de paiement 4.

### 6.4 Second exemple de mise en oeuvre

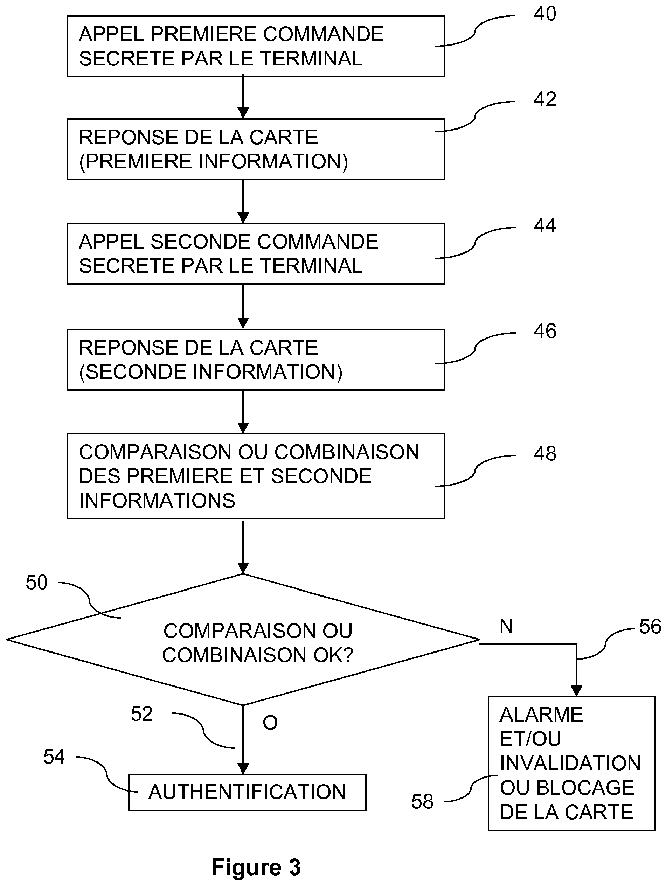

On présente ci-dessous, en relation avec la figure 3, les étapes principales d'un procédé de détection de cartes à microprocesseur non authentiques selon un second mode de réalisation particulier de l'invention.

On se place dans la suite dans une configuration où une carte à puce (qu'elle soit authentique 2 ou clonée 2') est insérée dans le lecteur de cartes 6 du terminal de paiement 4 et où le programme de contrôle PC du terminal de paiement 4 a été modifié en réponse par exemple à une information selon laquelle des cartes clonées sont en circulation.

Comme illustré en figure 3, le procédé de détection selon l'invention débute par une étape 40 d'appel d'au moins une première commande dite secrète dans le programme de contrôle PC modifié du terminal de paiement 4.

Cette première commande secrète est traitée par la carte à puce et le résultat du traitement (première information) est ensuite transmis (communiqué) au terminal de paiement 4, à l'étape 42.

S'ensuit une étape 44 d'appel d'au moins une seconde commande dite secrète dans le programme de contrôle PC modifié du terminal de paiement 4.

Cette seconde commande secrète est traitée par la carte à puce et le résultat du traitement (seconde information) est ensuite transmis au terminal de paiement 4, à l'étape 46.

Les première et seconde informations sont ensuite comparées ou combinées dans le terminal de paiement 4, à l'étape 48, afin de délivrer un résultat de détection de l'authenticité de la carte à puce.

Par exemple, l'appel aux premières et secondes commandes secrètes permet en premier lieu de récupérer respectivement une première et une seconde information dans deux emplacements mémoire différents de la carte, puis d'en effectuer la somme ou le produit, et de comparer le résultat avec un résultat attendu afin de délivrer un résultat de détection (52 ou 56).

De la même manière que dans le premier mode de réalisation en relation avec la figure 2, la sortie « oui » 52 permet par exemple un passage à une étape 54 d'authentification classique qui consiste à comparer une signature saisie au clavier du terminal de paiement 4 aux données présentes dans la carte à puce 2. La sortie « non » 56 indique la détection de la présence d'un clone qui peut entraîner à l'étape 58 la génération d'une alarme et/ou l'invalidation ou le blocage du clone par le terminal de paiement 4.

L'envoi simultané ou séquentiel de deux commandes secrètes dans ce second mode de réalisation permet ainsi de détecter de manière encore plus fiable une carte à puce clonée.

Le procédé de l'invention est relativement peu coûteux, fiable et simple à mettre en oeuvre. Il permet de lutter contre la contrefaçon de cartes à puce, ou d'un objet portatif similaire, de détecter les cartes non authentiques (clones) et d'empêcher leur utilisation.

### 6.5 Variantes

La présente invention peut s'appliquer également à toute situation nécessitant une restriction de l'accès à un lieu ou à un local, à un véhicule appartenant à une ou plusieurs personnes, à un site internet ou une base de données, par exemple.

La liaison entre le terminal lecteur de cartes et la carte à puce peut être effectuée par contacts ou à distance (RFID par exemple).

## Revendications

1. Procédé d'authentification de cartes à microprocesseur, visant à déterminer si une carte est une carte authentique, fournie par un diffuseur autorisé, ou une carte non authentique, appelée clone, fournie par un tiers non autorisé, à l'aide d'un programme de contrôle d'au moins un terminal lecteur de cartes, ledit programme envoyant à chaque carte des commandes appartenant à un jeu de commandes standard et public,
**caractérisé en ce que**, chaque carte authentique stockant dans une mémoire de stockage de commandes, lors de sa fabrication, ledit jeu de commandes standard et public, et un jeu d'au moins une commande supplémentaire, dite secrète, il comprend :
- pendant une première période, une étape de mise en oeuvre dudit programme de contrôle dans au moins un terminal lecteur de cartes, utilisant ledit jeu de commandes standard et public, pour chaque transaction ; et
- après détection de cartes clonées en circulation :
- une étape de réception par le ou lesdits terminaux lecteurs de cartes d'un programme de contrôle modifié, envoyant à chaque carte à authentifier au moins une commande secrète appartenant audit jeu d'au moins une commande supplémentaire mémorisée dans la ou lesdites cartes authentiques et absente dans les cartes clonées ;
- une étape de mise en oeuvre dudit programme de contrôle modifié dans le ou lesdits terminaux lecteur de cartes, pour chaque transaction ;
- une étape de détection de l'authenticité de ladite carte, lors d'une transaction, si ladite au moins une commande secrète est reconnue et/ou traitée de façon correcte par ladite carte, ou de la présence d'un clone, si ladite au moins une commande secrète n'est pas reconnue et/ou est traitée de façon erronée par ladite carte.

2. Procédé selon la revendication 1, **caractérisé en ce que** la détection de la présence d'un clone entraîne la génération d'une alarme et/ou l'invalidation ou le blocage dudit clone.

3. Procédé selon l'une quelconque des revendications 1 et 2, **caractérisé en ce que** l'envoi de ladite au moins une commande secrète à ladite carte provoque un traitement par ladite carte comprenant au moins une des opérations appartenant au groupe comprenant :
- lecture et/ou écriture dans une mémoire ;
- opérations mathématiques et logiques.

4. Procédé selon l'une quelconque des revendications 1 à 3, **caractérisé en ce que** ladite étape de détection de l'authenticité de ladite carte comprend les sous-étapes suivantes :
- envoi d'au moins deux commandes secrètes à ladite carte, de façon à obtenir au moins deux informations ;
- comparaison ou combinaison desdites informations, pour délivrer le résultat de la détection.

5. Carte à microprocesseur pour la mise en oeuvre du procédé d'authentification selon l'une quelconque des revendications 1 à 4, **caractérisée en ce qu'**elle comprend une mémoire de stockage de commandes, comprenant :
- un premier jeu de commandes standard et public ; et
- un second jeu d'au moins une commande supplémentaire, dite secrète, inséré lors de la fabrication d'une carte authentique.

6. Carte selon la revendication 5, **caractérisée en ce qu'**au moins ledit second jeu est stocké dans une partie sécurisée de ladite mémoire.

7. Terminal lecteur de cartes à microprocesseur, pour la mise en oeuvre du procédé d'authentification selon l'une quelconque des revendications 1 à 4, **caractérisé en ce qu'**il comprend :
- des moyens de réception et d'exécution d'un programme de contrôle modifié, envoyant à chaque carte à authentifier au moins une commande supplémentaire, dite secrète, d'un jeu d'au moins une commande supplémentaire, dite secrète, inséré lors de la fabrication de chaque carte authentique, en plus dudit jeu de commandes standard et public, dans une mémoire de stockage de commandes de chaque carte authentique, et absente dans les cartes clonées ;
- des moyens de détection de l'authenticité de ladite carte, si ladite commande secrète est reconnue et/ou traitée de façon correcte par ladite carte, ou de la présence d'un clone, si ladite commande secrète n'est pas reconnue et/ou est traitée de façon erronée par ladite carte.

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre du procédé d'authentification selon l'une au moins des revendications 1 à 4 dans un terminal lecteur de cartes.

## Patentansprüche

1. Verfahren zur Erkennung von Mikroprozessorkarten, das bestimmen soll, ob eine Karte eine authentische Karte ist, die von einem autorisierten Verteiler geliefert wird, oder eine nicht authentische Karte, Klon genannt, ist, die von einem nicht autorisierten Dritten geliefert wird, mit Hilfe eines Kontrollprogramms mindestens eines Kartenleseendgeräts, wobei das Programm an jede Karte Befehle sendet, die einem standardmäßigen und öffentlichen Befehlssatz angehören,
**dadurch gekennzeichnet, dass** es, wobei jede authentische Karte in einem Speicher zur Befehlsspeicherung bei ihrer Herstellung den standardmäßigen und öffentlichen Befehlssatz und einen Satz von mindestens einem so genannten geheimen Zusatzbefehl speichert, umfasst:
- während einer ersten Periode einen Schritt des Einsatzes des Kontrollprogramms in mindestens einem Kartenleseendgerät, das den standardmäßigen und öffentlichen Befehlssatz für jede Transaktion verwendet; und
- nach Erfassung von geklonten Karten im Umlauf:
- einen Schritt des Empfangs von dem oder den Kartenleseendgerät(en) eines modifizierten Kontrollprogramms, das an jede zu erkennende Karte mindestens einen Geheimbefehl sendet, der dem Satz von mindestens einem Zusatzbefehl angehört, der in der oder den authentischen Karte(n) gespeichert und in den geklonten Karten nicht vorhanden ist;
- einen Schritt des Einsatzes des modifizierten Kontrollprogramms in dem oder den Kartenleseendgerät(en) für jede Transaktion;
- einen Schritt der Erfassung der Authentizität der Karte bei einer Transaktion, wenn der mindestens eine Geheimbefehl erkannt und/oder von der Karte korrekt bearbeitet wird, oder des Vorhandenseins eines Klons, wenn der mindestens eine Geheimbefehl nicht erkannt und/oder von der Karte falsch bearbeitet wird.

2. Verfahren nach Anspruch 1, **dadurch gekennzeichnet, dass** die Erfassung des Vorhandenseins eines Klons zur Erzeugung eines Alarms und/oder zur Ablehnung oder Blockierung des Klons führt.

3. Verfahren nach einem der Ansprüche 1 und 2, **dadurch gekennzeichnet, dass** das Senden des mindestens einen Geheimbefehls an die Karte zu einer Bearbeitung durch die Karte führt, umfassend mindestens einen der Vorgänge, die der folgenden Gruppe angehören, umfassend:
- Lesen und/oder Schreiben in einem Speicher;
- mathematische und logische Vorgänge.

4. Verfahren nach einem der Ansprüche 1 bis 3, **dadurch gekennzeichnet, dass** der Schritt der Erfassung der Authentizität der Karte die folgenden Unterschritte umfasst:
- Senden von mindestens zwei Geheimbefehlen an die Karte, um mindestens zwei Informationen zu erhalten;
- Vergleichen oder Kombinieren der Informationen, um das Resultat der Erfassung zu liefern.

5. Mikroprozessorkarte für den Einsatz des Erkennungsverfahrens nach einem der Ansprüche 1 bis 4, **dadurch gekennzeichnet, dass** sie einen Speicher zur Befehlsspeicherung umfasst, umfassend:
- einen ersten Satz von standardmäßigen und öffentlichen Befehlen; und
- einen zweiten Satz von mindestens einem so genannten geheimen Zusatzbefehl, der bei der Herstellung einer authentischen Karte eingesetzt wird.

6. Karte nach Anspruch 5, **dadurch gekennzeichnet, dass** mindestens der zweite Satz in einem gesicherten Teil des Speichers gespeichert ist.

7. Kartenleseendgerät mit Mikroprozessor für den Einsatz des Erkennungsverfahrens nach einem der Ansprüche 1 bis 4, **dadurch gekennzeichnet, dass** es umfasst:
- Mittel zum Empfang und zur Ausführung eines modifizierten Kontrollprogramms, die an jede zu erkennende Karte mindestens einen so genannten geheimen Zusatzbefehl eines Satzes von mindestens einem so genannten geheimen Zusatzbefehl senden, der bei der Herstellung jeder authentischen Karte zusätzlich zu dem standardmäßigen und öffentlichen Befehlssatz in einen Speicher zur Befehlsspeicherung jeder authentischen Karte eingesetzt wurde und bei den geklonten Karten nicht vorhanden ist;
- Mittel zur Erfassung der Authentizität der Karte, wenn der Geheimbefehl erkannt und/oder korrekt von der Karte bearbeitet wird, oder des Vorhandenseins eines Klons, wenn der Geheimbefehl nicht erkannt und/oder von der Karte falsch bearbeitet wird.

8. Computerprogrammprodukt, das von einem Kommunikationsnetz fernladbar und/oder auf einem von einem Computer lesbaren Träger gespeichert und/oder von einem Mikroprozessor ausführbar ist, **dadurch gekennzeichnet, dass** es Programmcodebefehle für den Einsatz des Erkennungsverfahrens nach mindestens einem der Ansprüche 1 bis 4 in einem Kartenleseendgerät umfasst.

## Claims

1. Method for authenticating micro-processor cards, intended to determine whether a card is a genuine card, supplied by an authorised distributor, or a fake card, known as a clone, supplied by an unauthorised third party, by means of a checking program of at least one card reader terminal, said program sending to each card commands belonging to a standard and public set of commands,
**characterised in that**, whereby each genuine card, during the manufacture thereof, stores in a command storage memory said standard and public set of commands, and a set of at least one additional, so-called secret command, it comprises:
- during a preliminary period, a step of implementing said checking program in at least one card reader terminal, using said standard and public set of commands, for each transaction; and
- after detecting cloned cards in circulation:
-- a step of receiving, by said one or more card reader terminals, a modified checking program, sending to each card to be authenticated at least one secret command belonging to said set of at least one additional command stored in memory in said one or more genuine cards and not present in the cloned cards;
-- a step of implementing said modified checking program in said one or more card reader terminals, for each transaction;
-- a step of detecting the authenticity of said card, during a transaction, if said at least one secret command is recognised and/or processed correctly by said card, or the presence of a clone, if said at least one secret command is not recognised and/or is processed wrongly by said card.

2. Method according to claim 1, **characterised in that** the detection of the presence of a clone leads to the generation of an alarm and/or the invalidation or blocking of said clone.

3. Method according to any one of claims 1 and 2, **characterised in that** the sending of said at least one secret command to said card causes said card to perform a processing operation that includes at least one of the operations belonging to the group that comprises:
- reading and/or writing in a memory;
- mathematical and logic operations.

4. Method according to any one of claims 1 to 3, **characterised in that** said step for detecting the authenticity of said card comprises the following substeps:
- sending at least two secret commands to said card, so as to obtain at least two pieces of information;
- comparing or combining said pieces of information, in order to deliver the detection outcome.

5. Micro-processor card for implementing the authentication method, according to any one of claims 1 to 4, **characterised in that** it comprises a command storage memory, comprising:
- a first standard and public set of commands; and
- a second set of at least one additional, so-called secret command inserted at the time of manufacture of a genuine card.

6. Card according to claim 5, **characterised in that** at least said second set is stored in a secure part of said memory.

7. Micro-processor card reader terminal, for implementing the authentication method according to any one of claims 1 to 4, **characterised in that** it comprises:
- means for receiving and running a modified checking program, sending to each card to be authenticated at least one additional, so-called secret command, from a set of at least one additional, so-called secret command, inserted at the time of manufacture of each genuine card, in addition to said standard and public set of commands, into a command storage memory of each genuine card, and not present in the cloned cards;
- means for detecting the authenticity of said card, if said secret command is recognised and/or processed correctly by said card, or the presence of a clone, if said secret command is not recognised and/or is processed wrongly by said card.

8. Computer program product that can be downloaded from a communications network and/or stored on a medium that can be read by computer and/or run by a micro-processor, **characterised in that** it comprises program code instructions for implementing the authentication method according to at least one of claims 1 to 4 in a card reader terminal.
